Europäisches Patentamt

European Patent Office

Office européen des brevets

(19)

(11) Numéro de publication: **0 160 591**
**A1**

(12)

# DEMANDE DE BREVET EUROPEEN

(21) Numéro de dépôt: **85400562.6**

(22) Date de dépôt: **22.03.85**

(51) Int. Cl.⁴: **G 01 N 29/00**

(30) Priorité: **23.03.84 FR 8404523**

(43) Date de publication de la demande:
**06.11.85 Bulletin 85/45**

(84) Etats contractants désignés:
**AT BE CH DE GB IT LI LU NL SE**

(71) Demandeur: **SOCIETE NATIONALE DES CHEMINS DE FER FRANCAIS**
**88, rue Saint-Lazare**
**F-75436 Paris Cedex 09(FR)**

(71) Demandeur: **MATIX INDUSTRIES (Société Anonyme)**
**59, rue Saint-Lazare**
**F-75009 Paris(FR)**

(72) Inventeur: **Turbe, Jean-Pierre**
**26, rue Fernand Collot**
**F-77100 Nanteuil-Les-Meaux(FR)**

(74) Mandataire: **L'Helgoualch, Jean**
**OFFICE PICARD 134 Boulevard de Clichy**
**F-75018 Paris(FR)**

(54) Procédé et dispositif de contrôle non destructif d'un rail de voie ferrée.

(57) L'invention concerne le contrôle des rails de voies ferrée.

Le dispositif de contrôle d'un rail (2) d'une voie ferrée, comprend un chariot (1) roulant sur le rail (2) et tracté par un véhicule ferroviaire, ce chariot (1) portant au moins une sonde (7, 8) ultrasonore émettrice et/ou réceptrice en contact sonore avec la surface du champignon du rail (2); au moins une sonde (8) est déplaçable sur un coulisseau (6) tandis que la sond (7) est fixe par rapport au chariot (1); le dispositif comporte un vérin (9) déplaçant la sonde (8), ainsi que des moyens de commande du vérin en fonction des variations de l'énergie reçue par la sonde réceptrice.

Application au contrôle non destructif, en voie et en continu, des rails de voie ferrée.

FIG. 1

Croydon Printing Company Ltd

EP 0 160 591 A1

## Procédé et dispositif de contrôle non destructif d'un rail de voie ferrée.

L'invention concerne le contrôle des rails de voies ferrées, et plus particulièrement un procédé de contrôle non destructif d'un rail de voie ferrée, en voie et en continu, ainsi qu'un dispositif pour la mise en oeuvre d'un tel procédé.

Les contraintes et les surcharges dynamiques auxquelles la voie est soumise provoquent le développement de défauts internes dans le rail, tels que taches ovales, fissures horizontales, transversales ou longidudinales, étoilures, etc.

Il est important de pouvoir détecter ces défauts en voie par une méthode non destructrice, afin de pouvoir changer à temps les portions de rails défectueux.

La méthode la plus répandue de contrôle non destructif de l'état interne des rails en voie est l'auscultation du rail par ultrasons. Cette technique consiste à mettre en contact avec le champignon du rail des sondes émettrices, réceptrices ou émettrices-réceptrices dont l'orientation est adaptée aux types de défauts que l'on recherche.

Les échos captés des ultrasons émis sont généralement visualisés sur des écrans cathodiques. Ces échos sont également enregistrés graphiquement, ce qui permet la détermination de la position et de la nature des défauts détectés. L'interprétation des défauts s'effectue également à l'aide d'une calculatrice digitale dont l'imprimante délivre un rapport direct sur l'emplacement et la nature des défauts.

Les sondes peuvent être installées sur des chariots, roulant sur les rails, et maintenues en contact sonore avec le métal du rail par l'intermédiaire d'un film d'eau. On peut également utiliser des sondes placées dans une roue roulant sur le rail, le contact sonore entre la sonde et la bande de roulement étant assuré par exemple par un liquide enfermé dans la roue, comme décrit dans le brevet US 4.165.648.

Les sondes à utiliser et leur positionnement sont déterminés par les caractéristiques des défauts à détecter. En exploitation, il est important que chaque sonde reste constamment positionnée avec précision par rapport au rail de la voie auscultée.

Pour les sondes travaillant avec un faisceau réfléchi sous incidence non nulle sous le patin du rail, l'espacement longitudinal doit être fonction de la hauteur du rail pour une bonne réception. Pour les sondes destinées à rechercher les défauts de l'âme du rail, relativement étroite, c'est leur positionnement transversal par rapport à l'axe du rail qui doit être assuré avec précision.

Dans certaines réalisations existantes, le positionnement latéral des sondes par rapport au rail est réalisé par l'appui forcé, par un vérin ou un ressort, d'une pièce mécanique rigidement liée au chariot porte-sondes, contre la face latérale interne du champignon du rail considérée comme référence géométrique transversale du profil du rail.

Ces réalisations présentent des inconvénients importants liés à la diversité des largeurs des champignons des rails posés en voie, provenant aussi bien des différents types de rails posés que des divers degrés d'usure latérale ou surlargeur due à l'écrasement des champignons de rails. Les sondes sont ainsi mal positionnées et ne peuvent garantir une bonne qualité du contrôle.

Il existe sur certaines réalisations des commandes manuelles du positionnement transversal et/ou longitudinal des sondes. Ces équipements ne donnent toutefois pas satisfaction, car ces commandes doivent être actionnées en fonction d'une observation visuelle de l'état du champignon du rail, ce qui ne peut conduire qu'à un résultat approximatif et est illusoire à partir d'une certaine vitesse de déplacement du véhicule de contrôle.

Le brevet US 4.044.594 décrit un dispositif d'auscultation d'un rail au moyen d'une seule sonde logée dans une roue, nécessitant un système complexe de régulation pour corriger les variations latérales et les variations angulaires de la roue résultant des irrégularités de la surface du rail. Un tel dispositif ne peut fonctionner efficacement à des vitesses relativement élevées.

La présente invention utilise des sondes glissantes et a pour but de permettre le positionnement automatique des palpeurs dans leurs positions optimales par rapport au champignon du rail pour obvier aux inconvénients précités des dispositifs existants.

L'invention a donc pour objet un procédé de contrôle non destructif d'un rail d'une voie ferrée, en voie et en continu, ainsi qu'un dispositif simple et efficace conçu pour la mise en oeuvre automatique d'un tel procédé sur un véhicule se déplaçant sur le rail à une vitesse d'environ 40-50 km/h.

Selon le procédé de contrôle, en voie et en continu, non destructif d'un rail d'une voie ferrée objet de la présente invention, on ausculte le rail à l'aide d'un faisceau d'ondes ultrasonores émis et capté à l'aide d'au moins une sonde émettrice et/ou réceptrice glissante, en contact avec la surface du champignon du rail et portée par un chariot

0160591

roulant sur le rail. Ce procédé se distingue par le fait qu'on modifie la position d'au moins une sonde par rapport au chariot pour maintenir une position optimale relative de la sonde par rapport au rail, et par le fait qu'on commande ces variations de position de la sonde par les variations d'intensité d'un faisceau ultrasonore réfléchi, dans les conditions de fonctionnement normales, par la face inférieure de la semelle du rail ausculté.

Suivant une forme préférentielle, on utilise au moins deux sondes glissantes et on modifie leur position transversale par rapport au chariot pour les maintenir dans le plan médian du rail, ainsi que la distance les séparant l'une de l'autre, en fonction de la hauteur du rail.

Le dispositif de contrôle, en voie et en continu, non destructif d'un rail d'une voie ferrée objet de l'invention comprend un chariot roulant sur le rail et tracté par un véhicule ferroviaire, ce chariot porte au moins une sonde ultrasonore émettrice et/ou réceptrice glissante, en contact avec la surface du champignon du rail. Ce dispositif se distingue par le fait qu'au moins une sonde est déplaçable par rapport à ce chariot, par le fait qu'il comporte des moyens d'actionnement de cette sonde dans ses déplacements ainsi que des moyens de commande de ces moyens d'actionnement en fonction des variations de l'énergie reçue par la sonde réceptrice.

Les caractéristiques et avantages de l'invention apparaitront plus en détail dans la description ci-après, relative à deux formes de réalisation du dispositif, données à titre d'exemples non limitatifs, en référence aux dessins annexés.

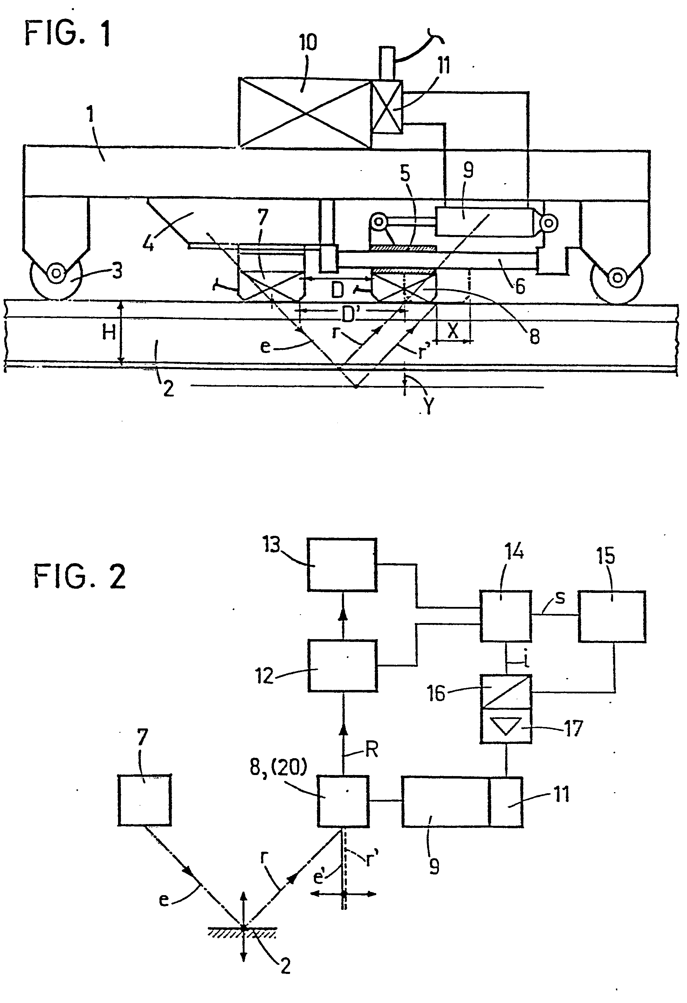

La figure 1 illustre, vu de côté, un chariot porte-sondes portant des sondes destinées à l'exploitation du faisceau avec une réflexion sous incidence non nulle sous la semelle du rail et muni d'un dispositif provoquant un déplacement, dans le sens de l'axe du rail, d'une sonde émettrice par rapport à une sonde réceptrice pour ajuster automatiquement la distance séparant ces deux sondes en fonction de la hauteur réelle du rail.

La figure 2 illustre un schéma bloc d'un circuit de commande électronique du déplacement des sondes par rapport au chariot porte-sondes.

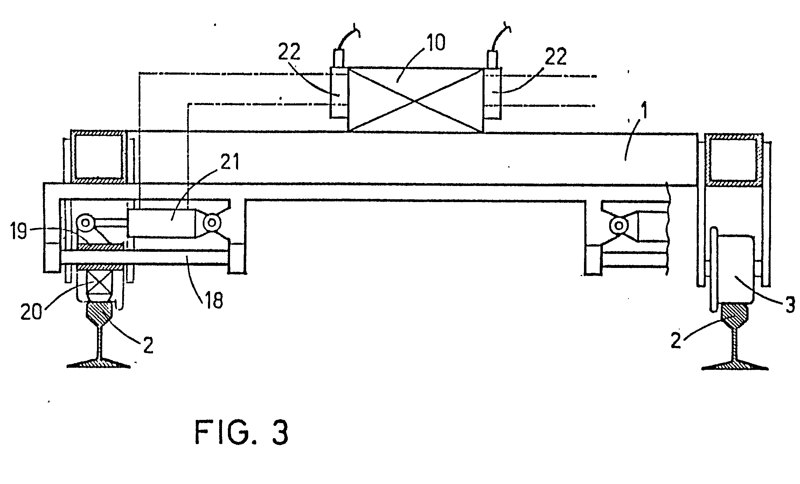

La figure 3 illustre, vu de face, un chariot porte-sondes portant des sondes émettrices et réceptrices destinées à la recherche de défauts de l'âme du rail et muni d'un dispositif provoquant un déplacement des sondes par rapport au chariot transversalement par rapport au rail pour maintenir celles-ci dans une position centrée sur l'âme du rail.

On utilise pour ausculter le rail, des sondes émettrices et réceptrices travaillant par paire, exploitant un faisceau d'ondes ultrasonores émis sous incidence non nulle se réfléchissant sur la surface inférieure de la semelle du rail, l'écartement entre les sondes, ou leur inclinaison, étant réglé en fonction de la hauteur du rail.

Le procédé selon la présente invention consiste à asservir automatiquement la position transversale des sondes émettrices et réceptrices des ondes ultrasonores par rapport au plan médian ou âme du rail et/ou la position de ces sondes en fonction de la hauteur du rail.

Pour réaliser cet asservissement au moins une sonde est montée déplaçable transversalement respectivement longitudinalement ou angulairement par rapport au chariot porte-sondes et des moyens sont prévus pour modifier la position des ou au moins d'une sonde par rapport à ce chariot porte-sondes. Pour commander les moyens modifiant la position des sondes on utilise des sondes émettrices et réceptrices à ultrasons placées sur la surface de roulement du champignon du rail et on commande lesdits moyens de déplacement de ces sondes avec un signal fonction de l'énergie reçue par la sonde réceptrice.

Pour permettre une auscultation du rail indépendante des variations de hauteurs de ce rail, on utilise une sonde émettrice dont le faisceau ultrasonore traverse le champignon et l'âme du rail, formant avec l'axe longitudinal du rail un angle qui peut être par exemple d'environ 30 à 40°. Ce faisceau incident est réfléchi par la surface inférieure de la semelle du rail et est renvoyé vers la surface de roulement du rail. La distance séparant les points d'intersection de la surface de roulement du rail avec les faisceaux émis et réfléchis dépend évidemment de la hauteur du rail. Ainsi, si la distance séparant la sonde réceptrice de la sonde émettrice correspond à la hauteur du rail, l'énergie reçue sera maximum. On peut commander des moyens de déplacement des sondes l'une par rapport à l'autre dans le sens de l'axe du rail en fonction du niveau d'énergie reçue par la sonde réceptrice.

On peut également assurer un niveau de réception optimum, quelle que soit la hauteur du rail, en modifiant l'inclinaison de l'axe de la sonde émettrice par rapport à l'axe longitudinal du rail. Les moyens modifiant l'inclinaison de la sonde émettrice sont commandés également par les variations d'énergie reçues par la sonde réceptrice.

Pour maintenir les sondes alignées dans le plan médian du rail le faisceau ultrasonore émis est envoyé perpendiculairement à la surface de roulement du rail, il se propage sur toute la hauteur de ce rail et si les sondes sont correctement positionnées, il se réfléchit sur la surface inférieure de la semelle du rail, retraverse l'âme et le champignon du rail et est capté par la sonde réceptrice. Si le positionnement transversal des sondes est défectueux, le faisceau ultrasonore se réfléchit sur la surface inférieure du champignon du rail et est déflecté latéralement, cette surface n'étant pas perpendiculaire aux rayons émis. Il s'ensuit que l'énergie captée en retour est nulle ou beaucoup plus faible du fait de ces réflexions parasites que si les sondes sont correctement positionnées. La commande des moyens de déplacement des sondes est ainsi réalisée par un signal qui est fonction de l'énergie ultrasonore reçue, ce qui permet de maintenir en permanence les sondes dans le plan longitudinal du rail.

Une première forme d'exécution du dispositif de contrôle non destructif des rails d'une voie ferrée comportant un asservissement de la distance, comptée parallèlement à l'axe du rail, séparant une sonde émettrice d'une sonde réceptrice en fonction de la hauteur du rail est illustrée aux figures 1 et 2.

Ce dispositif comporte un chariot porte-sondes (1) relié de façon connue et non illustrée, au bogie d'un véhicule de contrôle d'une voie ferrée. Ce chariot (1) roule sur le rail (2) à l'aide de galets (3) réglables en hauteur. Ce chariot (1) comporte un support (4) portant la ou les sondes émettrices, respectivement réceptrices, en contact sonore avec le rail, destinées à la détection par ultrason de certains défauts particuliers du rail exploitant un faisceau d'ondes ultrasonores avec une réflexion sous incidence non nulle sous la semelle du rail. Ces sondes d'auscultation travaillent par paire, émettrices-réceptrices, et la distance les séparant dépend de la hauteur du rail. Les sondes récep-

8

0160591

trices, respectivement émettrices, sont portées par un coulisseau (5) monté coulissant sur un ou plusieurs guides longitudinaux (6) du chariot (1). Ces guides (6) sont solidaires du chariot (1) et s'étendent parallèlement à l'axe longitudinal du rail (2).

Le dispositif illustré comporte une sonde émettrice ou réceptrice de positionnement (7) portée par le support (4) et une sonde réceptrice (8) ou émettrice, portée par le coulisseau (5). Toutes les sondes d'auscultation du profil ainsi que les sondes de positionnement (7) et (8) sont disposées de telle façon sur le chariot (1) que leurs faces actives soient en contact étroit et permanent avec la surface supérieure du rail (2). Bien entendu, les sondes de positionnement (7) et (8) peuvent également servir de sondes d'auscultation du rail.

Le coulisseau (5) est relié au chariot (1) par l'intermédiaire d'un vérin (9) dont le cylindre est articulé sur le chariot (1) tandis que le piston est articulé sur le coulisseau (5). Ce vérin est actionné à l'aide d'un fluide sous pression provenant d'un groupe d'alimentation hydraulique ou pneumatique (10) délivrant du fluide sous pression aux chambres du vérin (9) par l'intermédiaire d'une servo-valve (11). A l'aide de ce dispositif d'actionnement (9, 10, 11), il est possible de modifier la distance D séparant les sondes (7) et (8) parallèlement à l'axe du rail (2).

La commande de la servo-valve (11) est assurée par un dispositif électronique dont un schéma de fonctionnement est donné à la figure 2.

Ce dispositif électronique comporte un élément de mémoire (12) alimenté par le signal R de la sonde réceptrice (8), et mémorisant la valeur de ce signal R au temps t qui est proportionnel à l'énergie du faisceau ultrasonore réfléchi r au temps t. Au terme d'un intervalle de temps $\Delta t$ la valeur mémorisée dans la mémoire (12) est transférée dans une mémoire (13) mémorisant cette valeur Rt tandis que la mémoire (12) mémorise la valeur $R(t+\Delta t)$. Un comparateur (14) compare les valeurs mémorisées dans les mémoires (12) et (13) et délivre un signal i dont l'amplitude correspond à la différence $\Delta R = \{R(t+\Delta t)-Rt\}$ et d'autre part un signal s indiquant le signe de la différence $\Delta R$. Le signal s est mémorisé dans une mémoire (15) commandant un inverseur de signe (16), tandis que le signal i commande un amplificateur de puissance (17) au travers de l'inverseur de signe (16). L'amplificateur (17) commande la servo-valve (11).

En fonctionnement normal, l'intensité et l'angle d'incidence du faisceau d'ultrasons e émis par la sonde (7) sont constants, et si la distance D séparant les sondes (7) et (8) correspond à la hauteur H du rail, le faisceau réfléchi r frappe le centre de la sonde (8) de sorte que le signal R délivré par celle-ci est maximum.

Lorsque le chariot (1) est déplacé le long du rail (2) et tant que la hauteur H de ce rail reste constante, le signal reçu R reste constant à sa valeur maximum et la différence $\Delta R$ est nulle, de sorte que la servo-valve (11) est maintenue à son état de repos pour lequel aucune des chambres du vérin (9) n'est alimentée en fluide.

La distance D séparant les sondes d'une même paire et particulièrement la sonde (7) de la sonde (8) reste donc inchangée.

Si la hauteur du rail (2) est modifiée en H', le faisceau réfléchi r' n'atteint plus ou n'atteint que partiellement la sonde (8) et le signal (R) diminue en valeur absolue, de sorte que la différence $\Delta R$ n'est plus nulle et que son signe (dès le second intervalle de mesure) correspond à une augmentation ou à une diminution de la hauteur H du rail (2). Ce signal ΔR commande donc un déplacement du coulisseau (5) par l'intermédiaire du vérin (9) de la servo-valve (11) et de l'amplificateur (17) dans le sens déterminé par l'inverseur (16) de telle façon que la distance D' corresponde à la hauteur H' du rail (2) pour laquelle la réception du faisceau réfléchi est maximum.

Pour que la commande des déplacements des sondes soit indépendante des défauts du rail et donc des variations de haute fréquence de l'intensité du faisceau reçu, on peut prévoir un filtre passe-bas éliminant ces variations instantanées.

On réalise ainsi un asservissement de la distance D séparant deux sondes d'une même paire à la hauteur réelle du rail (2). Dans ces conditions les différences de niveau de réception des sondes portées par le coulisseau (5) sont indépendantes des variations de la hauteur du rail et correspondent à des défauts du rail (2).

Au lieu de modifier la distance D entre une sonde émettrice et la sonde réceptrice qui lui est associée, on peut modifier l'inclinaison, ou angle d'incidence, du faisceau émis en fonction de la hauteur H du rail.

Une seconde forme d'exécution du dispositif de contrôle non destructif des rails d'une voie comportant un asservissement de la position transversale des sondes par rapport au chariot porte-sondes est illustrée à la figure 3.

Ce dispositif comporte un chariot porte-sondes (1) relié de façon connue et non illustrée au bogie d'un véhicule de contrôle d'une voie ferrée, roulant sur les rails (2) de la voie par l'intermédiaire de galets (3). Au dessus de chaque file de rails (2), le chariot (1) comporte un ou plusieurs guides (18) s'étendant parallèlement au plan ce la voie et perpendiculairement aux axes des files de rails (2) servant de support à un coulisseau (19) monté coulissant sur ce ou ces guides (18), portant les sondes émettrices et réceptrices ultrasoniques en contact sonore avec le rail, destinées à l'auscultation des rails (2) et dont la position transversale par rapport au rail est déterminante pour une bonne auscultation des défauts qu'elles doivent détecter.

Ce coulisseau (19) porte encore une sonde émettrice-réceptrice d'ultrasons (20) maintenue en contact avec la surface supérieure du rail (2). Cette sonde (20) émet un faisceau d'ondes ultrasonores (e') (Fig.2) perpendiculairement à la surface de roulement du rail (2) qui, lorsque la sonde (20) est située dans le plan médian du rail, traverse le champignon et l'âme du rail, se réfléchit sur lui-même en r' sur la face inférieure de la semelle du rail et retraverse l'âme et le champignon du rail avant d'être capté. Dans ces conditions l'énergie reçue est maximale, par contre si la sonde est décalée transversalement hors du plan médian du rail, des réflexions parasites sur les surfaces latérales inférieures du champignon du rail réduisent l'intensité du faisceau réfléchi capté par la sonde (20).

Le dispositif décrit comporte encore des moyens de déplacement transversal du coulisseau (19) constitués dans l'exemple illustré par un vérin (21) dont le cylindre est articulé sur le chariot (1) et le piston sous le coulisseau (19), alimenté en fluide sous pression à partir d'un groupe d'alimentation (10) par l'intermédiaire de servo-valves (22).

Ces servo-valves (22) permettent suivant leurs états, soit de bloquer le vérin (8) dans sa position, soit d'alimenter l'une ou l'autre de ses chambres et provoquer ainsi un déplacement dans un sens ou dans l'autre du coulisseau (19). Ces servo-valves (22) sont commandées par un dispositif

0160591

électronique, piloté par le signal de réception du faisceau réfléchi r' délivré par la sonde émettrice-réceptrice (20), dont le schéma fonctionnel est identique à celui de la figure 2 au fait près, que les sondes (7) et (8) sont remplacées par la sonde émettrice-réceptrice (20), normale à la surface du rail et que l'amplificateur (17) commande la servo-valve (22) et donc le vérin (20) commandant les déplacements transversaux du coulisseau transversal (19).

Ainsi, les sondes portées par le coulisseau transversal (19) sont maintenues dans le plan médian du rail (2).

Il est évident que dans une forme d'exécution non illustrée, le dispositif peut combiner les asservissements transversaux et longitudinaux décrits, les guides (6) étant portés par le coulisseau (19) et non pas par le chariot directement, par exemple.

Dans une autre variante, on peut remplacer les vérins (9, 20) par des moteurs pas à pas modifiant la position des coulisseaux (5, 19) respectivement.

Il est également possible d'utiliser les sondes émettrices/réceptrices ultrasonores commandant les moyens de déplacement simultanément comme sondes d'auscultation des défauts du rail.

Au cas où l'énergie émise par la sonde émettrice n'est pas constante, on utilise le rapport entre l'énergie émise et l'énergie reçue pour commander le déplacement des sondes.

REVENDICATIONS

1. Procédé de contrôle, en voie et en continu, non destructif d'un rail d'une voie ferrée selon lequel on ausculte le rail à l'aide d'un faisceau d'ondes ultrasonores émis et capté à l'aide d'au moins une sonde émettrice et/ou réceptrice glissante en contact sonore avec la surface du champignon du rail et portée par un chariot roulant sur le rail, caractérisé par le fait qu'on modifie la position d'au moins une sonde par rapport au chariot, par asservissement de ladite position aux variations d'intensité d'un faisceau ultrasonore réfléchi, dans les conditions de fonctionnement normales, par la face inférieure de la semelle du rail ausculté.

2. Procédé selon la revendication 1, caractérisé par le fait qu'on modifie la position transversale d'une sonde par rapport au chariot pour maintenir cette sonde dans le plan médian du rail.

3. Procédé selon l'une quelconque des revendications 1 et 2, caractérisé par le fait qu'on modifie la distance séparant une sonde émettrice de la sonde réceptrice qui lui est associée, en fonction de la hauteur du rail.

4. Procédé selon l'une quelconque des revendications 1 et 2, caractérisé par le fait qu'on modifie l'angle que forme l'axe du faisceau ultrasonore émis par la sonde émettrice avec l'axe longitudinal du chariot en fonction de la hauteur du rail.

5. Procédé selon la revendication 2, caractérisé par le fait que la sonde émettrice/réceptrice est déplaçable perpendiculairement au plan médian du rail par rapport au chariot qui les porte et par le fait que les déplacements de cette sonde sont commandés par les variations d'intensité du faisceau réfléchi capté, et par le fait que le faisceau ultrasonore est émis perpendiculairement à la surface de roulement du rail et réfléchi par la surface inférieure de la semelle du rail.

6. Procédé selon la revendication 3, caractérisé par le fait qu'on modifie la distance séparant une sonde émettrice de la sonde réceptrice qui lui est associée, comptée parallèlement à l'axe longitudinal du chariot, et par le fait que les variations de cette distance sont commandées par les variations d'intensité d'un faisceau ultrasonore réfléchi par la surface inférieure de la semelle du rail et formant avec celle-ci un angle différent de 90°.

7. Dispositif de contrôle, en voie et en continu, non destructif d'un rail d'une voie ferrée, comprenant un chariot roulant sur le rail et tracté par un véhicule ferroviaire, ce chariot portant au moins une sonde ultrasonore émettrice et/ou réceptrice glissante en contact sonore avec la surface du champignon du rail, caractérisé par le fait qu'au moins une sonde est déplaçable par rapport à ce chariot, par le fait qu'il comporte des moyens d'actionnement de cette sonde dans ses déplacements ainsi que des moyens de commande de ces moyens d'actionnement en fonction des variations de l'énergie reçue par la sonde réceptrice.

8. Dispositif selon la revendication 7, caractérisé par le fait que les sondes sont portées par au moins un coulisseau se déplaçant sur au moins un guide solidaire du chariot, perpendiculaire au plan médian du rail.

9. Dispositif selon la revendication 7, caractérisé par le fait que les sondes réceptrices respectivement émettrices sont portées par au moins un coulisseau se déplaçant sur au moins un guide longitudinal parallèle à l'axe longitudinal du rail, tandis que les sondes réceptrices respectivement émettrices associées sont montées fixes sur le chariot.

10. Dispositif selon la revendication 7, caractérisé par le fait que la sonde émettrice est montée pivotante sur le chariot, autour d'un axe sensiblement perpendiculaire au plan médian du rail.

FIG. 1

FIG. 2

FIG. 3

Office européen
des brevets

**RAPPORT DE RECHERCHE EUROPEENNE**

**0160591**
Numéro de la demande

EP   85 40 0562

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X,D | US-A-4 044 594 (OWENS)<br><br>* Colonne 8, ligne 62 - colonne 9, ligne 4 *<br><br>--- | 1,2,5, 7 | G 01 N 29/00 |
| A,D | US-A-4 165 648 (PAGANO)<br>* Colonne 4, ligne 41 - colonne 5, ligne 6 *<br><br>--- | 1,3,7 | |
| A | US-A-4 235 112 (KAISER)<br><br>* Colonne 2, ligne 16 - colonne 3, ligne 28 *<br><br>--- | 1,2,5, 7 | |
| A | GB-A-1 545 324 (NUCLEAR POWER CO.)<br>* Page 3, ligne 42 - page 4, ligne 26 *<br><br>----- | 1,7 | |

**DOMAINES TECHNIQUES RECHERCHES (Int. Cl.4)**

G 01 N   29/00

Le present rapport de recherche a eté établi pour toutes les revendications

| Lieu de la recherche<br>LA HAYE | Date d'achèvement de la recherche<br>01-07-1985 | Examinateur<br>BINDON C.A. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82